Europäisches Patentamt

European Patent Office

Office européen des brevets

(11) Publication number: **0 076 001**
**A1**

# (12) EUROPEAN PATENT APPLICATION

(21) Application number: **82201181.3**

(22) Date of filing: **22.09.82**

(51) Int. Cl.³: **C 04 B 41/06**

(30) Priority: **28.09.81 NL 8104429**

(43) Date of publication of application:
**06.04.83 Bulletin 83/14**

(84) Designated Contracting States:
**BE DE FR GB LU NL SE**

(71) Applicant: **N.V. Koninklijke Sphinx**
**Boschstraat 24**
**NL-6211 AX Maastricht(NL)**

(72) Inventor: **Augustin, Ernest Jozef Gerardus**
**Vliegenstraat 17**
**NL-6241 CE Bunde(NL)**

(72) Inventor: **Dekkers, Wilhelmus Hubertus Marie**
**Brommelen 21**
**NL-6243 CM Geulle(NL)**

(74) Representative: **Stigter, Nicolaas Adriaan et al,**
**Octrooibureau Los en Stigter B.V. P.O. Box 20052**
**Weteringschans 96**
**NL-1000 HB Amsterdam(NL)**

(54) Method of producing ceramic articles, particularly floortiles, with a slip-resisting surface.

(57) A method of producing ceramic articles, such as floor tiles, comprising forming a ceramic screen printing paste (4') containing as an ingredient grains of a nonfusible material together with a bonding glass or glaze, applying said paste to the article (1) by screen printing in a pattern of alternate paste-coated and uncoated surface parts, said paste on subsequent firing forming a non-flowing stiff melt having a high granular density, the nonfusible grains in said melt cemented together to form a compact mass having a rough surface.

fig.4

Method of producing ceramic articles, particularly floor-tiles, with a slip-resisting surface.

The invention relates to a method of producing ceramic articles, particularly floor-tiles and the like, with a slip-resisting surface, in which granular particles of a nonfusible material together with a bonding means are applied on a surface of the article.

In a known method of this kind (see for instance the Netherlands patent application 73.07663) grains of corundum are mixed with glazing material and this mixture is applied to the surface of the article in such a manner that after the firing of the glaze the grains become embedded in the glaze as separate roughness-providing points evenly spread over the whole surface of the article. To that effect a glazing material is used which during the firing still has such a viscosity that the grains do not completely submerge in the molten glaze. Also if the glaze is applied in layer portions of different thicknesses, for instance to obtain an embossed surface, in this known method the nonfusible grains are evenly distributed over the whole embossed surface, thus over the low and the high portions thereof.

The invention has for its object to provide a method of the above-described kind with which ceramic articles as above-mentioned are obtained having a slip-resisting surface, the anti-slip properties of which can be adapted in an optimal manner to the circumstances of use to be expected while at the same time allowing a great freedom in the choice of the esthetic outward appearance of the product. Furthermore, the surface concerned can be glazed or not as desired.

The method according to the invention is characterized by forming a ceramic screen printing paste comprising as an ingredient said nonfusible grains together with a bonding glass or glaze, applying said paste to the article by screen printing in a pattern of alternate paste-coated and uncoated surface parts, said paste on subsequent firing forming a non-flowing stiff melt having a high granular density, the nonfusible grains in said melt being cemented together to form a compact mass having a rough surface.

By the use of the above-mentioned ceramic screen printing paste it is possible to apply this paste by means of the well-known screen printing technic in any desired sharply outlined pattern of narrow or wide lines or bands, or of smaller or larger areas on the surface of the tile or the like, which pattern during and after the firing of the glaze layer is fully maintained without flowing or blurring of the edges because the paste on account of the high granular density of the nonfusible grains therein forms a stiff melt and because these grains are cemented together to a hard compact mass by the bonding glass or glaze. The resulting anti-slip properties of the treated surface can be varied by choosing the spacing and the form of the applied paste areas which may for instance be printed in a line pattern. In a humid environment the channels formed between these raised slip-resisting lines or areas can serve for accumulating and draining-off water. Furthermore, by varying the pattern and by adding dyes to the paste it is possible to obtain various decorative effects.

It is to be noted that it is of course known as such to decorate tiles and similar articles by screen printing.

According to a first embodiment of the method of the invention first a layer of a glazing material is applied to the surface of the article completely covering said surface whereupon said screen printing paste is printed in the desired pattern on said applied layer of glazing material whereby upon firing the nonfusible grains of the paste project above the smooth surface of the glaze.

In its cool state before firing the glazing material is relatively stiff so that the printing of the screen printing paste onto the layer of glazing material is generally well possible. As upon firing the glaze melts the compact grain masses of the applied paste areas will partly sink into the melting glaze layer in which however they will still partly project above the surface of the glaze. By properly choosing the thickness of the layer of the applied printing paste and the viscosity of the molten glaze it is possible to obtain that the grain masses project to the desired degree as they are cemented together.

According to another embodiment of the invention which is generally preferred, first the screen printing paste is printed in the desired pattern on the surface of the article and next a layer of an on firing smoothly flowing glazing material is applied covering the complete surface including the screen printed paste pattern, said layer having a thickness less than that of the printed-on paste, whereupon the article is fired.

In this case on firing the article the glazing material will flow from the relatively stiff non-flowing melt of the paste portions whereby the upper side of the compact grain masses of the paste become exposed to form rough surface parts.

In both of the above-mentioned embodiments the glaze after firing forms a smooth flat layer between the grain masses cemented together and projecting from this layer. The glaze component of the paste melts during the firing and is held between the grains to bond the same while fusing with the glaze of the applied glaze layer along the edges of the grain masses. In this way the grain masses are firmly held.

According to a third embodiment of the method according to the invention it is possible to print the screen printing paste in the desired pattern on the unglazed surface of the article, as in the above-mentioned second embodiment, whereupon however, the article is fired without the application of a layer of smoothly melting glazing material. In this manner an unglazed tile having raised slip-resisting areas can be obtained which may be useful in certain applications.

In this last embodiment of the method, as also in the first mentioned embodiment where the paste is likewise directly printed on the unglazed surface of the article, it is of great importance that the grain masses cemented together become firmly attached to the underlying tile body. It has been found that this can be obtained by adding to the ceramic screen printing paste a small amount of a clay component or a similar material adhering to the body of the article.

The nonfusible granular particles preferably consist of a mixture of relatively coarse particles providing the rough surface parts and a smaller amount of relatively fine particles filling the interstices between the coarse particles. In this manner the grains are more closely packed and are cemented together by thin intervening vitreous layers. The bond between the grains is thus increased and the coarse grains are prevented from breaking loose. An excess amount of vitreous material on the other hand would make the coherent body of grains brittle. The coarse grains can for example consist of aluminium oxyde or aluminium hydroxyde and the fine grains may consist of zirconium oxyde or zirconium silicate.

The invention will be further explained with reference to the drawing.

Fig. 1 and Fig. 2 illustrate a first embodiment of the method of the invention in which Fig. 1 shows in cross-section the situation after the application of the layer of glazing material and of the screen printing paste but before firing, whereas Fig. 2 shows the situation after firing;

Fig. 3 and Fig. 4 illustrate in a similar manner a second embodiment of the method which is preferably employed;

Fig. 5 illustrates a third embodiment of the method in the case of an unglazed tile; and

Fig. 6 and 7 are plan views of a part of a tile obtained with the method according to the invention and showing examples of printed patterns.

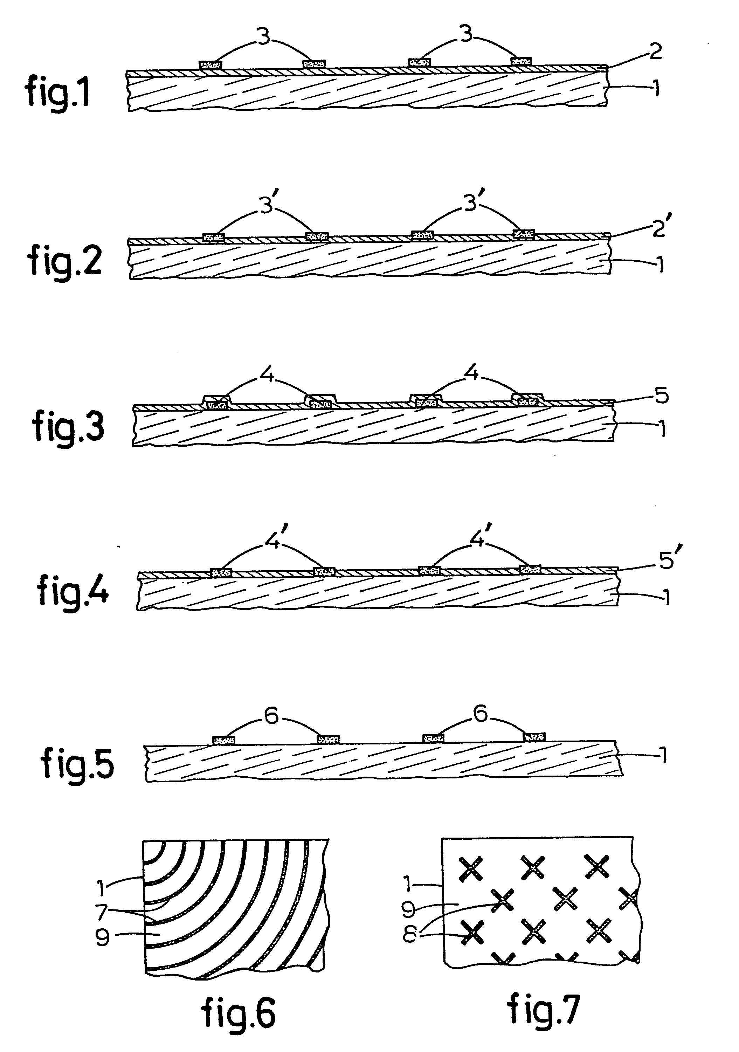

In Fig. 1 there is shown a biscuit-fired tile 1 on the upper surface of which a layer 2 of a glazing material has been applied so as to completely cover this surface. This glazing material can be of conventional composition which on firing forms a smoothly flowing melt. In the cold state before firing the layer 2 is relatively stiff allowing a ceramic screen printing paste 3 to be screen-printed thereon in a predetermined pattern comprising for instance lines or narrow bands of a desired width. This screen printing paste comprises granular particles or grains of a nonfusible material together with a binding glass or glaze. Preferably these nonfusible grains comprise relatively coarse grains of aluminium oxyde or aluminium hydroxyde providing the desired rough surface areas together with added relatively fine grains of zirconium oxyde or zirconium silicate filling the interstices between the coarse grains, said grains together forming approximately 10-35% of the weight of the paste. The coarse grains have a seize up to a maximum of about 500 μ and preferably between 20 μ and 400 μ, and the fine grains have a seize less than 20 μ.

In practice a screen printing paste or the following composition has shown to give good results:

| | | |
|---|---|---|
| 30-45 | % by weight | glazing material or glaze frits |
| 10-25 | % by weight | aluminium oxyde in granular form |
| 5- 0,5 | % by weight | zirconium oxyde or zirconium silicate in granular form |
| 5- 0 | % by weight | dyes |
| 5- 0,5 | % by weight | clay substances |
| 45-29 | % by weight | printing medium (e.g. polyglycol) |

In the embodiment of the Fig. 1 and 2 the clay substances may be left out if desired.

If thereupon the glaze is fired, the paste 3 forms a non-flowing stiff ceramic melt having a high granular density which partly sinks into the melting glazing material of the glaze layer 2 with its upper part still projecting above the glaze surface. The nonfusible grains of the paste are cemented together to form a compact mass 3' having a rough upper surface, the melting component of the paste forming thin cementing layers between these grains and also fusing integrally with the glazing material of the glaze layer 2'. The printing medium in the paste disappears. After cooling a smooth glaze layer 2' is obtained from which the compact grain masses 3' project with a compact rough surface providing the desired anti-slip effect and also a sharply outlined decorative effect. The fine grains of zirconium oxyde or zirconium silicate increase the solidity of the cemented grain masses and prevent separate grains from becoming detached.

According to the preferred method as illustrated in the Fig. 3 and 4, first the screen printing paste 4 is directly applied to the surface of the tile body 1 in the desired pattern. Because of the hard base screen printing can be carried out easier and with greater accuracy. The screen printing paste can have the same composition as above described. Next, the glaze layer 5 is applied which again extends across the whole tile surface and thus also covers the paste portions 4. The thickness of this glaze layer 5 is in this case smaller than the thickness of the paste portions 4. When thereupon the tile is fired, the melting glaze flows from the paste portions whereby the nonfusible grain masses 4' thereof again come to project above the smooth surface of the melting glaze 5'. At the same time the grains in the grain masses 4' are cemented together. The clay components provide a firm bond of the grain masses 4' to the underlying unglazed surface of the tile body 1.

In the embodiment of Fig. 5 the screen printing paste is again directly printed in the desired pattern on the surface of the tile body 1 as in the case of the embodiment of the Fig. 3 and 4, the paste again having the same composition as above described. However, in this case no glaze layer is applied but the tile is directly fired. The glaze and clay components of the screen printing paste provide a firm bond of the grain masses to the underlying unglazed surface of the tile body 1.

The Fig. 6 and 7 illustrate that the cemented grain masses 3', 4' and 6 may for instance form a pattern of uninterrupted lines 7 in the shape of concentric arcs (Fig. 6) or a cross-like pattern of interrupted lines 8. It will be clear, however, that also other patterns may be used and that the grain masses may also form greater surface areas or "islands" on the surface of the tile. By varying the distance between the raised rough surface areas the mean degree of roughness of the tile product can be selected. The intervening smooth glazed or unglazed areas form recessed channel-like areas 9 in which moisture can collect and which can be easily cleaned.

Claims:

1. Method of producing ceramic articles, particularly floor-tiles and the like, with a slip-resisting surface, in which granular particles of a nonfusible material together with a bonding means are applied on a surface of the article, c h a r a c t e r i z e d by forming a ceramic screen printing paste comprising as an ingredient said nonfusible grains together with a bonding glass or glaze, applying said paste to the article by screen printing in a pattern of alternate paste-coated and uncoated surface parts, said paste on subsequent firing forming a non-flowing stiff melt having a high granular density, the nonfusible grains in said melt being cemented together to form a compact mass having a rough surface.

2. Method according to claim 1, c h a r a c t e r i z e d in that first a layer of a glazing material is applied to the surface of the article completely covering said surface whereupon said screen printing paste is printed in the desired pattern on said applied layer of glazing material whereby upon firing the nonfusible grains of the paste project above the smooth surface of the glaze.

3. Method according to claim 1, c h a r a c t e r i z e d in that first the screen printing paste is printed in the desired pattern on the surface of the article and next a layer of an on firing smoothly flowing glazing material is applied covering the complete surface including the screen printed paste pattern, said layer having a thickness less than that of the printed-on paste, whereupon the article is fired.

4. Method according to claim 1, c h a r a c t e r i z e d in that the screen printing paste is printed in the desired pattern on the unglazed surface of the article whereupon the article is fired without the application of a further covering layer of glazing material.

5. Method according to anyone of the preceeding claims, c h a r a c t e r i z e d in that the nonfusible granular particles consist of a mixture of relatively coarse particles providing the rough surface parts, and a smaller quantity of relatively fine particles filling the interstices between the coarse particles.

6. Method according to claim 5, c h a r a c - t e r i z e d in that the coarse grains are of aluminium oxyde or aluminium hydroxyde and the fine grains are of zirconium oxyde or zirconium silicate.

7. Method according to anyone of the preceeding claims, c h a r a c t e r i z e d in that the nonfusible grains together make up 10-35% of the weight of the screen printing paste.

8. Method according to anyone of the preceeding claims, c h a r a c t e r i z e d in that to the ceramic screen printing paste is added a small quantity of clay components or of a similar material adhering to the body of the article.

9. Method according to claim 7, c h a r a c - t e r i z e d in that the ceramic screen printing paste has the following composition:

| | | |
|---|---|---|
| 30-45 | % by weight | glazing material or glaze frits |
| 10-25 | % by weight | aluminium oxyde in granular form |
| 5- 0,5 | % by weight | zirconium oxyde or zirconium silicate in granular form |
| 5- 0 | % by weight | dyes |
| 5- 0,5 | % by weight | clay substances |
| 45-29 | % by weight | printing medium (e.g. polyglycol |

10. Method according to anyone of the preceeding claims, c h a r a c t e r i z e d in that the screen printing paste is printed on the tile surface in a pattern of spaced uninterrupted or interrupted lines or narrow bands.

fig.1

fig.2

fig.3

fig.4

fig.5

fig.6

fig.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 04 B 41/06 |
| Y | FR-A-2 187 728 (AGROB) <br><br> *Claims* | 1,2,4, 6 | |
| | --- | | |
| Y | US-A-2 587 152 (R.B.HARLAM) <br> *Column 3, line 73 to column 4, line 3; column 4, lines 48-52; figures 1-4* | 1,3,10 | |
| | --- | | |
| Y | GB-A-1 224 935 (ZADADOCESKE KERAMICKE ZAVODY) <br> *Claim 1; page 1, lines 47 to 66* | 1,2 | |
| | --- | | |
| A | US-A-2 832 695 (M.D:COMPTON) | | |
| | ----- | | **TECHNICAL FIELDS SEARCHED (Int. Cl ³)** |
| | | | C 04 B 41/00 <br> E 04 F 15/00 <br> B 28 B 11/00 |

The present search report has been drawn up for all claims

| Place of search <br> THE HAGUE | Date of completion of the search <br> 22-12-1982 | Examiner <br> DAELEMAN P.C.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO Form 1503. 03.82